Europäisches Patentamt

European Patent Office

Office européen des brevets

(11) Publication number: **0 142 985**
**B1**

(12) **EUROPEAN PATENT SPECIFICATION**

(45) Date of publication of patent specification: **31.10.90**

(21) Application number: **84307884.1**

(22) Date of filing: **14.11.84**

(51) Int. Cl.⁵: **F 16 L 55/12, F 16 L 41/08, B 21 D 39/06, B 23 P 6/00, F 28 F 11/02**

(54) Method for providing a tubular insert within an aperture.

(30) Priority: **15.11.83 US 552187**

(43) Date of publication of application:
**29.05.85 Bulletin 85/22**

(45) Publication of the grant of the patent:
**31.10.90 Bulletin 90/44**

(84) Designated Contracting States:
**AT BE CH DE FR GB IT LI NL SE**

(56) References cited:
**EP-A-0 004 696**
**FR-A-2 514 099**
**GB-A-1 488 393**
**US-A-3 900 939**
**US-A-4 178 966**
**US-A-4 309 807**
**US-A-4 390 042**
**US-E- 30 802**

(73) Proprietor: **RAYCHEM CORPORATION (a Delaware corporation)**
**300 Constitution Drive**
**Menlo Park, California 94025 (US)**

(72) Inventor: **Stewart, John B.**
**1661 Filbert Street**
**San Francisco California 94123 (US)**
Inventor: **Szalvay, Laszlo**
**42, Wessex Way**
**San Carlos California 94070 (US)**

(74) Representative: **Jones, David Colin et al**
**Raychem Limited Intellectual Property Law Department Faraday Road Dorcan**
**Swindon, Wiltshire SN3 5HH (GB)**

Courier Press, Leamington Spa, England.

## Description

This invention relates to a method for providing tubular insert in contact with the internal surface of a tubular aperture.

In tube-type heat exchangers a first fluid flows through the heat exchanger tubes while a second fluid is in heat-exchange relationship therewith. If one of the tubes becomes defective a leak can occur which is obviously an unsatisfactory situation. In this situation it is sometimes necessary to plug the defective tube so that fluid does not flow therethrough, thereby preventing leakage and correcting the defective condition. In addition, it is sometimes necessary to provide a liner to the inside of a tube.

If such a defect occurs in the steam generator tubes of a nuclear reactor power plant, a very serious situation can result. When such a defect occurs in these tubes it not only allows coolant in the tubes to mingle with fluid outside the tubes, but also creates a radioactive contamination problem. It is clearly quite important not to allow fluid to leak from the tubes and contaminate surrounding fluid since the fluid in the tubes is generally radioactive. Plugging or sleeving the offending tube solves the problem and prevents contamination.

Mechanical plugging devices are commonly used to plug heat exchange devices, such as that shown in U.S. Patent 4,390,042. Mechanical devices, however, inherently depend upon mechanical installation and the skill of a particular installer. Therefore, they are not always entirely effective. Also, mechanical devices can be and often are difficult to install and remove, both of which represent serious problems.

In addition, providing a liner to the inside of a tube is a difficult procedure, especially where the tube is located in an operating situation.

U.S. Patent 3,900,939 utilizes a tube plug fabricated from a metallic alloy having a mechanical memory characteristic, i.e., a shape-memory alloy, whereby it can be physically deformed into a reduced diameter for insertion into the defective tube and thereafter induced to assume its original, larger diameter to secure the plug within the tube. However, this patent relies solely on the shape-memory alloy to plug the tube and it may not be entirely effective for this purpose and presents severe removability problems.

Materials, both organic and metallic, capable of possessing shape memory are well known. An article made of such materials can be deformed from an original, heat-stable configuration to a second, heat-unstable configuration. The article is said to have shape memory for the reason that, upon the application of heat alone, it can be caused to revert from its heat-unstable configuration to its original, heat-stable 'configuration, i.e., it "remembers" its original shape.

Among metallic alloys the ability to possess shape memory is a result of the fact that the alloy undergoes a reversible transformation from an austenitic state to a martensitic state with a change of temperature. Also, the alloy is considerably stronger in its austenitic state than in its martensitic state. This transformation is sometimes referred to as a thermoelastic martensitic transformation. An article made from such an alloy, for example, a hollow sleeve, is easily deformed from its original configuration to a new configuration when cooled below the temperature at which the alloy is transformed from the austenitic state to the martensitic state. The temperature at which this transformation begins is usually referred to as the Ms temperature. When an article thus deformed is warmed to the temperature at which the alloy starts to revert back to austenite, referred to as the As temperature, the deformed object will begin to return to its original configuration.

Shape-memory alloys have found many uses in recent years. For example, pipe couplings such as are described in U.S. Patents 4,035,007, 4,198,081 and 4 309,807 and British Patents 1,553,427, 1,554,431, 1,554,432, 1,554,433 and 1,488,393, electrical connectors such as those described in U.S. Patent No. 3,740,839, switches such as those described in US-A-4,205,293 and fastening devices such as are described in. GB-A-l,548,964.

The coupling disclosed in GB-A-1488393 comprises a heat recoverable member made from a memory metal and a sleeve member that is contacted and deformed by the heat recoverable member when it recovers.

The coupling disclosed in US-A-4309807 comprises a tubular member, at least a portion of which has a tapered outer surface, and, positioned about the tubular member, a band of a memory metal which exhibits a relatively low modulus at a first temperature and a relatively high modulus at a second temperature, the band being capable of contracting when brought to the second temperature so as to deform the tubular member.

It would be desirable to develop a method of providing a liner to the inside of the tube, and also to develop a method for plugging a tube, all in a convenient, economic and efficient manner, amenable to remote installation with robotics. It would also be desirable to develop an improved removable structure for achieving the foregoing.

The present invention provides a method of making a composite structure for providing a tubular insert in contact with the internal tubular surface of a tubular aperture, which comprises inserting into a tubular insert an annular tube-like driver of a shape-memory alloy while in its martensitic state, the driver being capable of deforming the tubular insert outwardly when it recovers from its martensitic state to its austenitic state, wherein before insertion, the external transverse dimension of the driver is greater than the internal transverse dimension of the insert so that the driver is deformed radially inwardly as it is inserted into the insert.

The composite structure is particularly applicable for blocking or lining tubular apertures in a heat exchanger. In such an application the tubular aperture that is blocked or lined may be the aperture of one of the condenser tubes themselves, or a tubular apertures in the tube block from which the condenser tubes extend, that is a tubular apertures in a three dimensional block.

Thus in another aspect, the invention provides a method of providing a tubular insert in contact with the internal tubular surface of a tubular aperture, which comprises:

(a) inserting into the tubular aperture a composite structure made by the method defined above; and

(b) causing the driver to recover from its martensitic state to its austenitic state so as to force the tubular insert outwardly into contact with the internal surface of the aperture.

Preferably, the driver has a tapered leading edge in its martensitic state, the tube insert has an inside diameter, the tapered leading edge of the driver has an outside diameter smaller than the inside diameter and the trailing edge of the driver has an outside diameter larger than said inside diameter.

In accordance with the present invention the driver is deformed by insertion while in its martensitic state and is capable of recovery to a non-deformed shape when transformed to its austenitic state.

The composite structure made by the present method may be removable by returning the driver to its martensitic state, reducing pressure exerted by the driver on the tube insert. In one embodiment the tube insert is closed at one end to plug the annular tube and preferably includes threads at the closed end of the tube insert. Preferably, the external surface of the insert includes means for engaging the inside tube surface.

The engaging means may comprise, for example, teeth. The teeth may be arranged, for example circumferentially around the tubular insert, or longitudinally along the insert. A longitudinal arrangement of teeth is preferred, for example, where the tubular insert is to be used as a torque coupling to couple together two tubular shafts.

The tubular apertures is preferably provided by providing a tube. The driver is also capable of further moving the insert outwardly into firm engagement, i.e., increasing pressure, with the inside tube surface by transforming said driver to the austenitic state, initial movement having been accomplished by insertion of the driver. It is also within the scope of the invention to deform (pre-compress) the driver partially prior to insertion to provide increased retention pressure and/or additional incremental movement of the driver when the driver is transformed to its austenitic state.

Embodiments of the present invention will now be described, by way of example, with reference to the accompanying drawings, wherein:

Figure 1 is a partial sectional view showing a pluglike tube insert and driver in their separated position;

Figures 2 and 3 are partial sectional views showing the components of Figure 1 in their assembled condition;

Figure 4 is a partial sectional view showing a device for separating the assembled components of Figures 1—3; and

Figure 5 is a partial sectional view showing assembled components in an alternate embodiment.

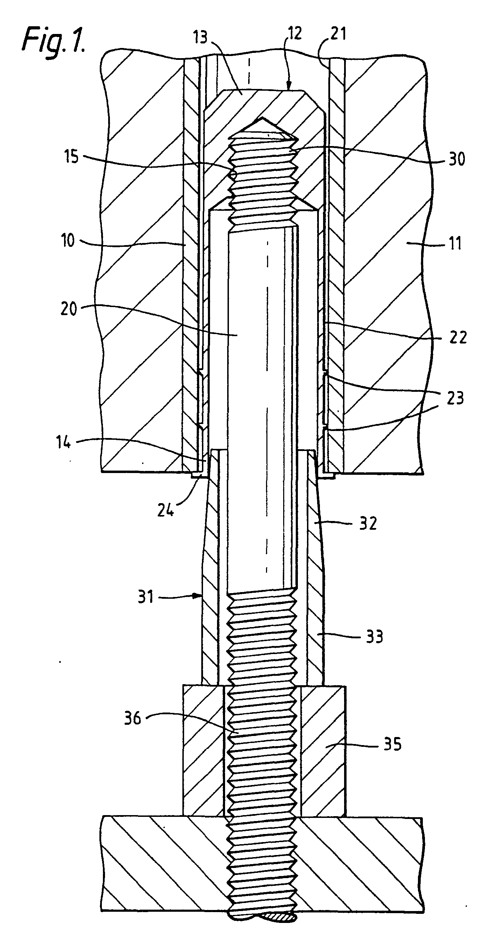

Referring to Figure 1, tube 10 is shown connected to tube sheet 11. It is desired to plug tube 10 or to provide an internal lining to tube 10. In the embodiment of Figure 1, there is shown the plugging of tube 10 with tube insert 12. Tube insert 12 is closed at the leading end 13 and open at the trailing end 14. Also, threads 15 are provided at closed end 13 for engagement with an insertion and removal means, such as bar 20 to be described below. Tube 10 and tube insert 12 may be made of any desired material based on the particular environment of use. Generally, for example, tube 10 is a metal heat-exchanger tube, for example, a tube of a nuclear reactor power plant, and tube insert 12 a metal insert. Tube insert 12 may be of the same material as tube 10, or a different material, if desired. For example, both tube 10 and tube insert 12 may be of the same metal or metal alloy in an exemplificative embodiment.

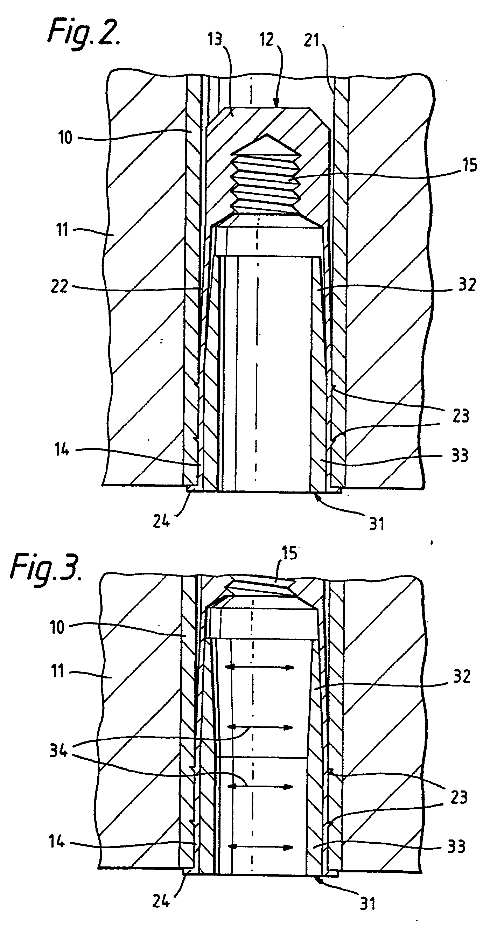

It is intended to engage the internal surface 21 of tube 10 with the external surface 22 of tube insert 12. In order to provide a firm engagement therebetween, it is preferred to provide means on external surface 22 of tube insert 12 such as teeth 23 which are capable of biting into internal surface 21 of tube 10 as shown in Figures 2 and 3. Naturally, a variety of such means may be readily envisioned, such as, for example, a roughened insert surface, or a simple provision of lands and grooves on external surface 22. Alternatively, other means for engaging surfaces 21 and 22 may include glues, epoxies and overlays of soft material and or fusible materials. In a preferred embodiment, means are provided to limit the depth of insertion of tube insert 12 into tube 10, such as flanges 24 on trailing edge 14 of tube insert 12 which engage the external surface of tube 10.

As shown in Figure 1, tube insert 12 preferably sits loosely in tube 10 so that it can be readily and conveniently inserted therein. Thus, in the preferred embodiment, the outside diameter of tube insert 12 is slightly smaller than the inside diameter of tube 10. Preferably, tube insert 12 is inserted into tube 10 by means of bar 20 having threads 30 complementary to threads 15 in closed end 13 of tube insert 12 as shown in Figure 1. Similarly, as will be described hereinbelow, a means such as threaded bar 20 may also be used for removal of tube insert 12 from tube 10.

An annular tube-like driver 31 is provided of a shape-memory alloy having a martensitic state and an austenitic state. The driver in its martensitic state preferably has a tapered leading edge 32 for insertion into tube insert 12. Preferably, the tapered leading edge 32 of driver 31 has an outside diameter smaller than the inside diameter of tube insert 12 and a trailing edge 33 with an outside diameter larger than the inside diameter of tube insert 12, as clearly shown in Figure 1. Thus, said preferred driver configuration in its martensitic state exerts outward pressure on said tube insert upon insertion therein, although other specific driver configurations could of course be used.

The shape-memory alloy driver in its austenitic state is capable of increasing the pressure between the tube insert 12 and the inside surface of tube 10, and moving the tube insert 12 outwardly into firm engagement with the inside surface of tube 10. The driver is deformed while in its martensitic state and is capable of recovery to a non-deformed shape when transformed to its austenitic state. As stated herein above, it is known that shape-memory alloys are considerably stronger in their austenitic state than in their martensitic state. Therefore, in one embodiment of the present invention, driver 31 is inserted in insert 12 in its martensitic state, compressing during insertion using the pseudoelastic portion of the martensitic stress strain curve to keep installation forces low. Compressing the driver in its martensitic state allows a large amount of tube insert deformation with low insertion force, thereby avoiding tube insert buckling. Tube insert 12 is fully installed when the trailing end 33 of driver 31 is flush with trailing end 14 of tube insert 12. When the driver is heated above its transformation temperature, the yield strength of the driver increases, thereby increasing the pressure between the external surface of the tube insert and the inside tube surface. Alternatively, one can provide the driver 31 with a slightly larger external diameter in its austenitic state than in its martensitic state. In this embodiment, when the plug is heated above its transformation temperature, the driver expands outwardly as shown by arrows 34 in Figure 3 moving the tube insert outwardly into firm engagement with the inside of the tube.

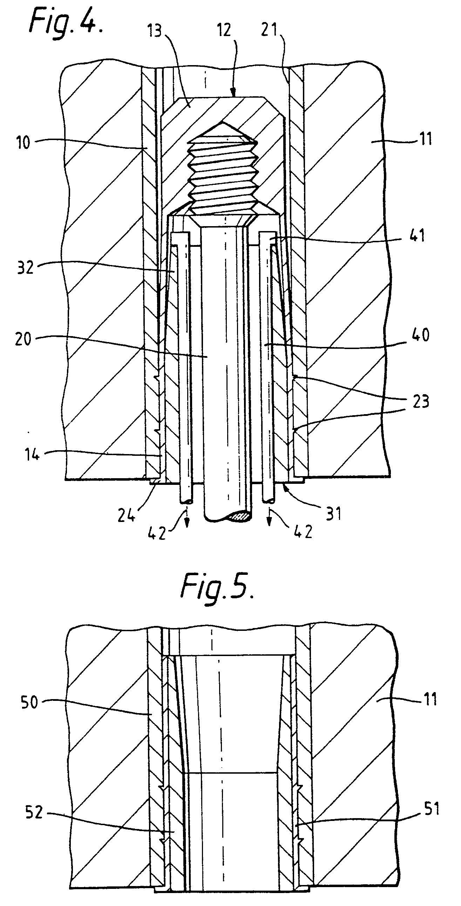

Installation of driver 31 is readily accomplished by any desired installation means such as means 35 shown schematically in Figure 1 for engagement with trailing end 33 of driver 31. Bar 20 may also be readily inserted with the same means 35 or with a separate means, if desired, and may have threads 36 located on the trailing end thereof for engagement with such insertion means. Thus, it can be seen that installation is readily accomplished by easily forcing driver 31 into tube insert 12. As the driver 31 is inserted into tube insert 12, the insert expands outwardly with teeth 23 engaging the interior tube walls. Outward pressure increases when the driver is transformed to its austenitic state. When removal of the assembly is desired, one needs simply to cool driver 31 below its transformation temperature, thereby reducing the pressure between tube insert 12 and tube 10, and pull the driver and insert out of the tube either simultaneously or sequentially. Removal of the cooled driver 31 allows access to the tube insert 12 which tends to spring back to a non-expanded dimension and may be easily removed. An exemplificative embodiment of such removal is shown in Figure 4 where bar 20 is shown in engagement with threads 15 on leading edge 13 of insert 12. Driver removal means 40 is provided with a leading flange 41 for engagement with tapered leading edge 32 of driver 31. As shown in Figure 4, the driver removal means 40 is simply inserted between bar 20 and driver 31 and the driver removal means moved in the direction of arrows 42 by any desired actuating means. Flange 41 clips over leading edge 32 and the driver may be removed either prior to removal of the tube insert 12 or at the same time therewith. Naturally, removal of the tube insert 12 is accomplished by means of threaded bar 20.

Figure 5 shows an alternative embodiment of the present invention wherein tube 50 is provided with a tube liner or tube insert 51 by means of driver 52 in a manner similar to Figures 1—3. Thus, tube insert or liner 51 is similar to tube insert 12 except that there is no closed end so that tube 50 is not plugged. Naturally, it may be desired in many applications to simply line the internal portions of a tube which can be readily and conveniently accomplished in accordance with the present invention.

Any shape-memory alloy may be used as the driver of the present invention. In the preferred embodiment, nickel-titanium alloys are employed. Optionally, the nickel-titanium alloys may contain small amounts of one or more additives in order to achieve particularly desirable results, such as, for example, nickel-titanium alloys containing small amounts of copper, iron or other desirable additives. Alternatively, copper-base alloys may, of course, be readily employed exhibiting shape-memory behaviour. Any of the shape-memory alloys described in the foregoing patents, for example, may be readily employed.

## Claims

1. A method of making a composite structure for providing a tubular insert (12) in contact with the internal tubular surface (21) of a tubular aperture (10), which comprises inserting into a tubular insert (12) an annular tube-like driver (31) of a shape-memory alloy while in its martensitic state, the driver being capable of deforming the tubular insert outwardly when it recovers from its martensitic state to its austenitic state, characterised in that, before insertion, the external transverse dimension of the driver is greater than the internal transverse dimension of the insert so that the driver is deformed radially inwardly as it is inserted into the insert.

2. A method as claimed in claim 1, in which the tubular insert (12) is closed at one end (13).

3. A method as claimed in claim 1 or claim 2, in which the tubular insert (12) is threaded internally, the insert being inserted in the aperture (10) by means of a threaded bar (20) which cooperates with the threads (15) on the insert.

4. A method as claimed in any one of the preceding claims, in which before deformation of the driver (31), at least its leading edge portion (32) is tapered, the transverse dimension of the driver at the leading edge being less than the internal dimension of the insert (12) and the transverse dimension of the trailing edge (33) of the driver being greater than the internal dimension of the insert.

5. A method of providing a tubular insert (12) in contact with the internal tubular surface (21) of a tubular aperture (10), which comprises:

(a) inserting into the tubular aperture a composite structure made by the method claimed in any one of claims 1 to 4; and

(b) causing the driver (31) to recover from its martensitic state to its austenitic state so as to force the tubular insert (12) outwardly into contact with the internal surface of the aperture.

## Patentansprüche

1. Verfahren zur Herstellung einer Verbundstruktur zur Bildung eines rohrförmigen Einsatzes (12) in Kontakt mit der rohrförmigen Innenfläche (21) einer rohrförmigen Öffnung (10), wobei das Verfahren umfaßt: Einsetzen eines ringförmigen rohrartigen Treibers (31) aus einer Legierung mit Form-Gedächtnis in ihrem martensitischen Zustand in einen rohrförmigen Einsatz (12), wobei der Treiber den rohrförmigen Einsatz nach außen verformen kann, wenn er sich aus seinem martensitischen Zustand in seinen austenitischen Zustand rückstellt, dadurch gekennzeichnet, daß vor dem Einsetzen die äußere Querabmessung des Treibers größer ist als die innere Querabmessung des Einsatzes, so daß der Treiber beim Einsetzen in den Einsatz nach radial innen verformt wird.

2. Verfahren nach Anspruch 1, wobei der rohrförmige Einsatz (12) an einem Ende (13) geschlossen ist.

3. Verfahren nach Anspruch 1 oder 2, wobei der rohrförmige Einsatz (12) ein Innengewinde aufweist und der Einsatz mit einer mit dem Gewinde (15) am Einsatz zusammenwirkenden Gewindestange (20) in die Öffnung (10) eingesetzt wird.

4. Verfahren nach einem der vorhergehenden Ansprüche, wobei vor dem Verformen des Treibers (31) wenigstens sein vorderer Randbereich (32) konisch verjüngt ist, wobei die Querabmessung des Treibers am vorderen Rand geringer ist als die Innenabmessung des Einsatzes (12) und die Querabmessung des hinteren Rands (33) des Treibers größer ist als die Innenabmessung des Einsatzes.

5. Verfahren zur Bildung eines rohrförmigen Einsatzes (12) in Kontakt mit der rohrförmigen Innenfläche (21) einer rohrförmigen Öffnung (10), wobei das Verfahren umfaßt:

(a) Einsetzen einer nach dem in einem der Ansprüche 1 bis 4 beanspruchten Verfahren hergestellten Verbundstruktur; und

(b) Bewirken, daß der Treiber (31) sich aus seinem martensitischen Zustand in seinen austenitischen Zustand rückstellt, um so den rohrförmigen Einsatz (12) nach außen in Kontakt mit der Innenfläche der Öffnung zu drücken.

## Revendications

1. Procédé pour réaliser une structure composite permettant la mise en place d'un insert tubulaire (12) au contact de la surface interne (21) d'une ouverture tubulaire (10), qui consiste à engager dans un insert tubulaire (12) un organe de serrage (31) semblable à un tube annulaire en alliage à mémoire de forme se trouvant dans son état martensitique, cet organe étant capable de déformer l'insert tubulaire vers l'extérieur lorsqu'il retourne de son état martensitique à son état austénitique, caractérisé en ce qu'avant l'insertion, la dimension transversale externe de l'organe de serrage est supérieure à la dimension transversale interne de l'insert de telle sorte que cet organe se déforme radialement vers l'intérieur à mesure qu'il est engagé dans l'insert.

2. Procédé suivant la revendication 1, dans lequel l'insert tubulaire (12) est fermé à une extrémité (13).

3. Procédé suivant la revendication 1 ou la revendication 2, dans lequel l'insert tubulaire (12) est taraudé, cet insert étant engagé dans l'ouverture (10) au moyen d'une tige filetée (20) qui coopère avec les filets (15) de l'insert.

4. Procédé suivant l'une quelconque des revendications précédentes, dans lequel avant la déformation de l'organe de serrage (31), ce dernier est effilé au moins dans la portion (32) constituant son bord d'attaque, la dimension transversale de cet organe au niveau de son bord d'attaque étant inférieure à la dimension interne de l'insert (12) et la dimension transversale du bord postérieur (33) de l'organe étant supérieure à la dimension interne de l'insert.

5. Procédé de mise en place d'un insert tubulaire (12) au contact de la surface interne (21) d'une ouverture tubulaire (10), qui consiste:

(a) à engager dans l'ouverture tubulaire une structure composite réalisée par le procédé suivant l'une quelconque des revendications 1 à 4; et

(b) à faire retourner l'organe de serrage (31) de son état martensitique à son état austénitique afin de presser l'insert tubulaire (12) vers l'extérieur en contact avec la surface interne de l'ouverture.

Fig.1.

Fig.2.

Fig.3.

Fig.4.

Fig.5.